# EUROPEAN PATENT SPECIFICATION

(11) **EP 3 141 841 B1**
(45) Date of publication and mention of the grant of the patent: **31.03.2021**
(21) Application number: 16187774.1
(22) Date of filing: 08.09.2016
(51) Int. Cl.: F24H 1/43, F16L 19/02, F28F 9/02, F28D 7/02, F24H 9/12, F24H 8/00

(54) **HEAT EXCHANGER FOR A DOMESTIC BOILER OR A WATER HEATER**
WÄRMETAUSCHER FÜR EINEN HAUSHALTSKESSEL ODER EINEN WARMWASSERBEREITER
ÉCHANGEUR THERMIQUE POUR CHAUDIÈRE DOMESTIQUE OU CHAUFFE-EAU

(30) Priority: 08.09.2015 IT UB20153466
(43) Date of publication of application: 15.03.2017
(73) Proprietor: Riello S.p.A., 37045 Legnago (IT)
(72) Inventor: CASIRAGHI, Stefano, 23875 OSNAGO (IT); CIOFOLO, Noè, 23816 BARZIO (IT); GIACOMETTI, Massimo, 37045 LEGNAGO (IT)
(74) Representative: Eccetto, Mauro

(56) References cited:
- EP-A1- 1 600 708
- WO-A2-2004/042289

## Description

The invention relates to a heat exchanger for a domestic boiler or a water heater.

In particular, the invention relates to a heat exchanger comprising a casing; and a tubular member, which is wound, in a helix shape, about a given axis, so as to form a plurality of adjacent coils, which are housed inside the casing. The tubular member, wound in a helix shape, is flown through by a liquid, usually water, while combustion fumes or, more generically, hot gases containing water vapour flow in the casing to release their heat to the liquid. The coils are spaced apart from one another so as to form an empty space where the combustion fumes can flow. In particular, the heat exchanger described above is configured for defining a path for the hot gases extending between the adjacent coils, so as to optimize the heat exchange between the hot gases and the liquid. To this regard, the dimensions of the tubular member, the shape of the cross section of the tubular member, and the dimensions of the empty space between the adjacent coils are very relevant designing parameters in order to optimize the heat exchange. Documents EP 1,627,190 B1; EP 1,600,708 A1; EP 1,750,070 A1; EP 1,750, 069 A1; EP 1,752,718 A1 show some significant examples of condensing heat exchangers used in domestic boilers. Document EP 1,600,708 discloses how to produce a heat exchanger, which comprises a tubular member having a cross section configured for optimizing the heat exchange parameters of the heat exchanger and two end sections, each machined and deformed so as to orient the end section in a desired direction and to adjust the cross section of the end section to a conduit that is part of a hydraulic water circulation circuit. This solution has proven to be be extremely effective in connecting the boiler to a hydraulic water circulation circuit, but scarcely. Each of EP 1 600 708 A1 and WO 2004 042289 A2 discloses a heat exchanger for a domestic boiler or water heater, the heat exchanger comprising a casing configured to convey combustion fumes, a tubular member, which is configures to convey water, which is wound in a helix to form a plurality of adjacent coils housed in the casing, with at least a straight end section housed in a tubular body of the casing and a hydraulic fitting which comprises a mounting part joined to the tubular body and a connecting part for tightly and hydraulically connecting an end section with a conduit of a hydraulic circuit and at least a sealing ring arranged between the connecting part and the end section for ensuring liquid-tight connection between the hydraulic fitting and the tube member.

The object of the invention is to provide a heat exchanger, which permits an easy connection to hydraulic circuits in a simple and cheap manner.

According to the invention there is provided a heat exchanger for a domestic boiler or a water heater, the heat exchanger comprising a casing configured to convey combustion fumes; a tubular member, which is configured to convey water, is wound in a helix about a given axis to form a plurality of adjacent coils housed in the casing, and at least a straight end section housed in a tubular body of the casing; a hydraulic fitting, which comprises a mounting part joined to the tubular body and a connecting part for tightly and hydraulically connecting an end section with a conduit of a hydraulic circuit; at least a sealing ring arranged between the connecting part and the end section for ensuring liquid-tight connection between the hydraulic fitting and the tubular member; a spacer fitted about the end section and cooperating with the hydraulic fitting and the tubular body in order to keep the sealing ring in a given position along the end section; at least a further sealing ring arranged between the mounting part and the tubular body for ensuring a gas-tight junction between the casing and the hydraulic fitting; wherein the tubular body comprises in sequence at least a cylindrical wall; an abutment for the spacer; a cylindrical wall section; and a first flange and the mounting part of the hydraulic fitting comprises a second flange selectively connectable to the first flange; and the further sealing ring is locked between the first flange and the second flange so that the hydraulic fitting is joined to the tubular body in a releasable manner.

By so doing, the heat exchanger can be connected to hydraulic circuits having different configurations of their own terminals by means of different hydraulic fittings, each suited to fulfil various layout needs, though leaving the structure of the tubular member and of the casing unchanged.

In other words, the base elements of the heat exchanger can be standardized regardless of the arrangement and the dimensions of the terminals of the hydraulic circuit to which it is connected.

In this way, the connecting and mounting parts of the hydraulic fitting have distinct functions also in terms of sealing.

As a consequence, assembling and disassembling the hydraulic fitting becomes very easy, as well as replacing the hydraulic fitting with a hydraulic fitting with different features.

The mounting part and the connecting part are made in a single piece, in particular by molding of a polymer material. As a consequence, the hydraulic fittings can be easily manufactured even with relatively complicated shapes.

The connecting part comprises a first pipe section shaped and sized to fit about the end section; a second pipe section shaped and sized to be connected to conduit; and an intermediate pipe section for connecting the cross-section of the first pipe section to the cross-section of the second pipe section. In other words, the connecting section fulfils the function of adjusting the end section to the conduit.

According to a first version, the connecting part is parallel to the end section and, in particular, is coaxial to the end section. In other words, in the first version, the hydraulic fitting defines a prolongation of the end section.

According to a second version, the connecting part forms a bend with respect to the end section and, in particular, forms an elbow.

According to a third version, said conduit is made in the casing and the connecting part comprises a wall fitted about the end section and connected to the conduit. In particular, said conduit leads into the tubular body.

Further features and advantages of the invention will be best understood upon perusal of the following description of a non-limiting embodiment thereof, with reference to the accompanying drawing, wherein:
- Figures 1 and 2 are perspective views, partly exploded and with parts removed for greater clarity, of the heat exchanger according to the invention;
- Figures 3 and 4 are sectional views, with parts removed for greater clarity and on a larger scale, of details of Figure 1; and
- Figure 5 is a sectional view, with parts removed for greater clarity and on a larger scale, of a variant of the detail of Figure 3.

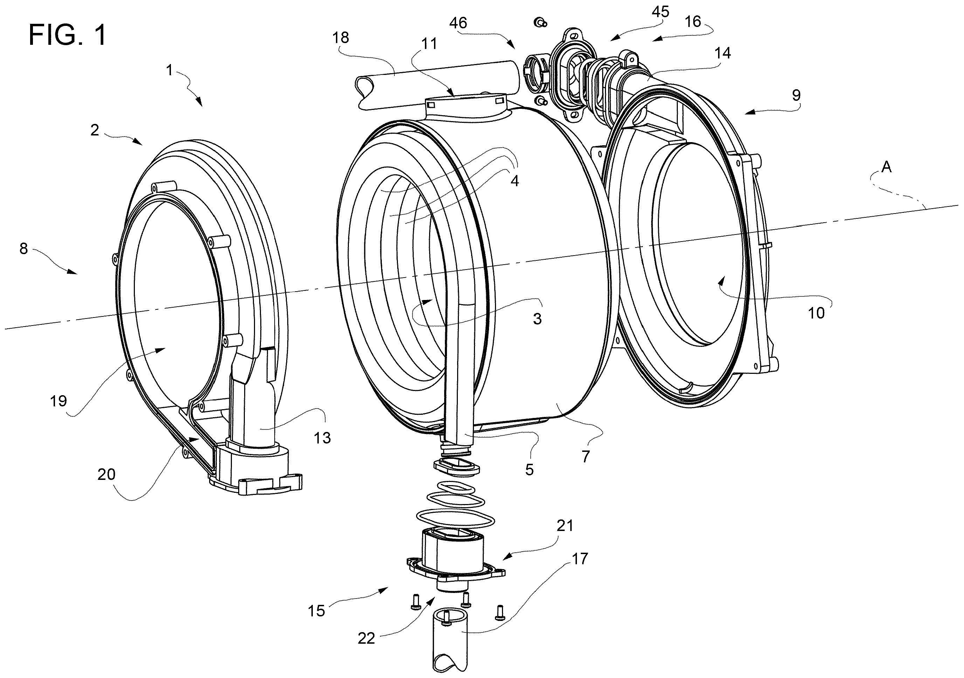

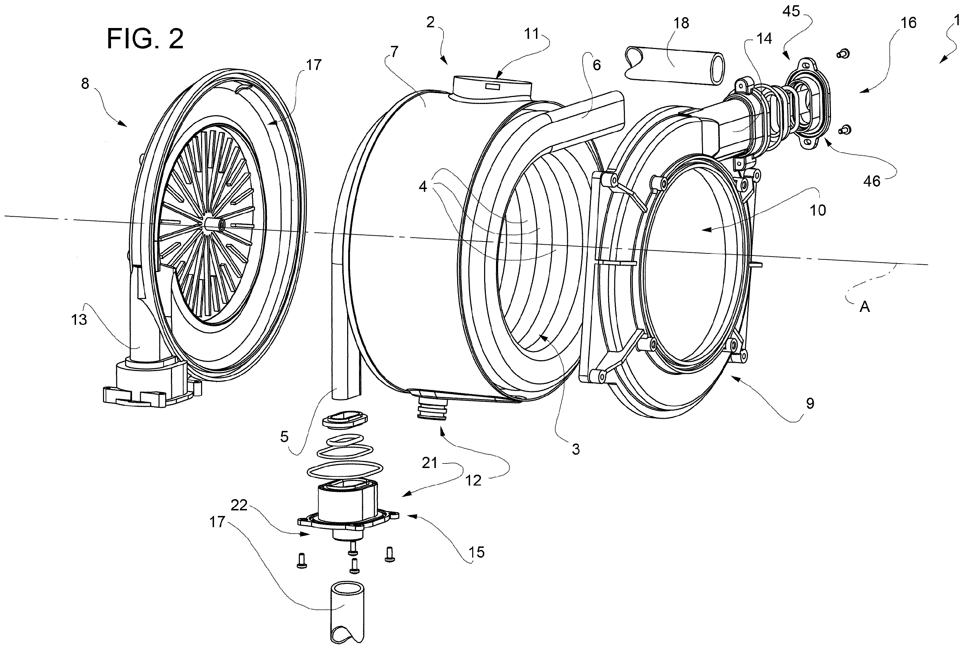

With reference to Figures 1 and 2, number 1 indicates, as a whole, a heat exchanger, which, in this specific case, is a condensing heat exchanger for the production of hot water. In the example shown, the heat exchanger 1 comprises a casing 2 with a cylindrical shape; and a tubular member 3, which is partly wound, in a helix shape, about an axis A so as to form coils 4 and two straight end sections 5 and 6 and is housed in the casing 2. Basically, the tubular member 3 is obtained through extrusion and is subsequently wound in a helix shape except for two end sections 5 and 6, which preserve the straight configuration. The end section 6 is visible only in Figure 2. The casing 2 comprises a lateral wall 7, which has a substantially cylindrical shape and is preferably made of a metal material, such as for example aluminium, or of a plastic material; an end wall 8 substantially shaped like a disc and an end wall 9 with a substantially annular shape. The end walls 8 and 9 are coupled to the lateral wall 7 so as to form the casing 2 and a combustion fumes circulation chamber. In this specific case, the end wall 9 has a central opening 10 and is configured for supporting a burner with a cylindrical shape, not shown in the accompanying Figures, which is partly arranged inside the combustion fumes circulation chamber. Alternatively, the hot fumes are conveyed through the central opening 10. The lateral wall 7 comprises an opening 11 for the extraction of the combustion fumes and an opening 12 for the extraction of the condensate.

The end sections 5 and 6 of the tubular member (3) are partly housed inside tubular bodies 13 and 14, which are obtained in the casing 2 and, in this particular case, in the end walls 8 and 9, respectively, and are configured for being coupled to respective hydraulic fittings 15 and 16 so as to hydraulically connect the tubular member 3 to respective conduits 17 and 18 of the hydraulic water circulation circuit.

With reference to Figure 1, the end wall 8 is configured for providing a heat exchanger, of which you can see a space 19 and a conduit 20, which are configured for being enclosed by a flange, which is not shown in the accompanying Figures. The conduit 20 is in communication with the tubular body 13.

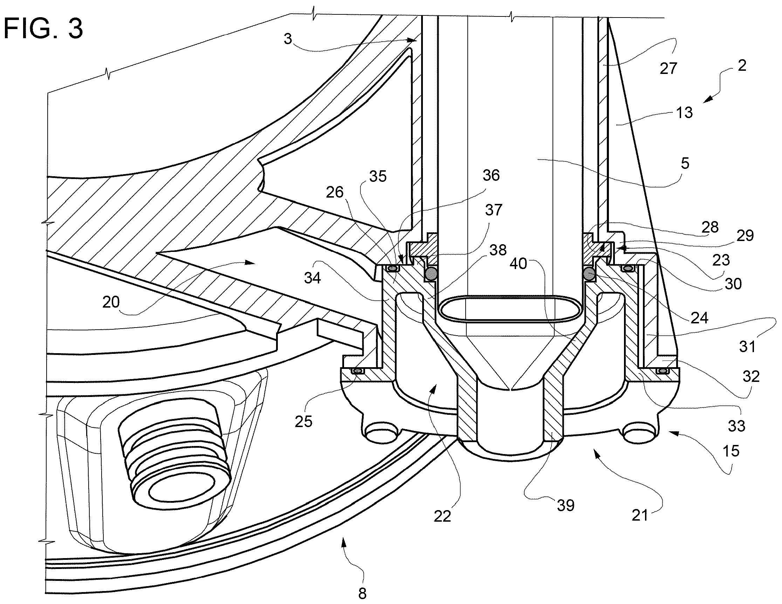

With reference to Figure 3, the hydraulic fitting 15 comprises a mounting part 21 fixed to the tubular body 13 and a connecting part 22 for tightly and hydraulically connecting the tubular member 3 to the conduit 17 (Figure 1). The mounting part 21 is configured for creating a shape coupling with the tubular body 3, while the connecting part 22 is configured for creating a hydraulic connection between the tubular member 3 and the conduit 17 and for adjusting the cross section of the conduit 3 to the cross section of the conduit 17. The hydraulic fitting 15 is coupled in a liquid-tight manner to the tubular member 3 and in a gas-tight manner to the casing 2. In the example shown herein, the heat exchanger 1 comprises a spacer 23 and a sealing ring 24. The spacer 23 is fitted about the end section 5 and cooperates with the hydraulic fitting 15 and the tubular body (13) in order to keep the sealing ring 24 in a given position along the end section 5. In particular, the spacer 23 comprises an annular wall fitted on the end section 5 and a radial wall arranged between the hydraulic fitting 15 and the tubular body 13. The heat exchanger 1 comprises a sealing ring 25 and a sealing ring 26, which are both arranged between the mounting part 21 and the tubular body 13, so as to prevent fumes from flowing out of the casing 2. The inner part of the tubular body 13 has, in sequence, a cylindrical wall 27; an abutment 28; a cylindrical wall section 29; an abutment 30; a cylindrical wall section 31; and an end flange 32. As a whole, the inner part of the tubular body 13 widens outwards thanks to the two consecutive abutments 28 and 29. The conduit 20 leads into the tubular body 13 in the area of the cylindrical wall 31. The mounting part 21 of the hydraulic fitting 15 comprises a flange 33 configured for being fixed in a releasable manner to the flange 32; a cylindrical wall 34, which, in use, is parallel to the wall 31; and an annular wall 35, along which there is obtained an abutment 36 striking against the abutment 30 and a protrusion 37 for placing the spacer 23 against the abutment 28. In this specific case, the sealing ring 25 is locked between the end flange 32 and the flange 33, so as to prevent fumes from flowing out of the casing 2. In particular, the flange 33 has a seat in which the sealing ring 25 is partly housed. The sealing ring 26 is locked between the abutment 30 and the abutment 36. In particular, along the abutment 36 there is obtained a seat in which the sealing ring 26 is partially housed. The connecting part 22 of the hydraulic fitting 15 comprises a pipe section 38, which is integral to the annular wall 35 and is shaped and sized to fit about the end section 5; a pipe section 39, which is shaped and sized to be connected to the conduit 17; and an intermediate pipe section 40 with a flared shape for connecting the cross-section of the pipe section 38 to the pipe section 39. The pipe sections 38, 39 and the intermediate pipe section 40 extend in a direction D1, which is parallel to the end section 5. In this specific case, the hydraulic fitting 15 is a coaxial fitting, whose function is that of carrying out a size adjustment between the tubular member 3 and the conduit (Figure 3

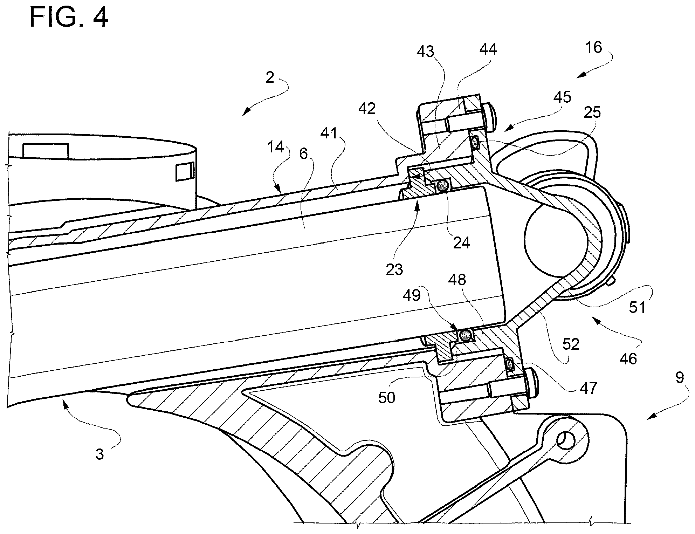

With reference to Figure 4, the inner part of the tubular body 14 has, in sequence, a cylindrical wall 41; an abutment 42; a cylindrical wall section 43, which defines a flange 44 in the area of its free end. As a whole, the inner part of the tubular body 14 widens outwards thanks to the abutment 42. The hydraulic fitting 16 comprises a mounting part 45 and a connecting part 46. The mounting part 45 comprises a flange 47 configured for being fixed in a releasable manner to the flange 44. The connecting part 46 of the hydraulic fitting 16 comprises a pipe portion 48, which is integral to the flange 47 and, in use, is parallel to the cylindrical wall 43 and is fitted around the end section 6. The pipe section 48 has a seat 49 for housing part of a spacer 23 and a sealing ring 24; and a protrusion 50 for keeping the spacer 23 in position against the abutment 42. The connecting part 46 comprises a pipe section 51 perpendicular to the pipe section 48, and an intermediate pipe section 52 with a cross-section configured for joining the cross-section of the pipe section 58 to the pipe section 51 and for defining a bend. The sealing ring 25 is locked between the flange 44 and the flange 47.

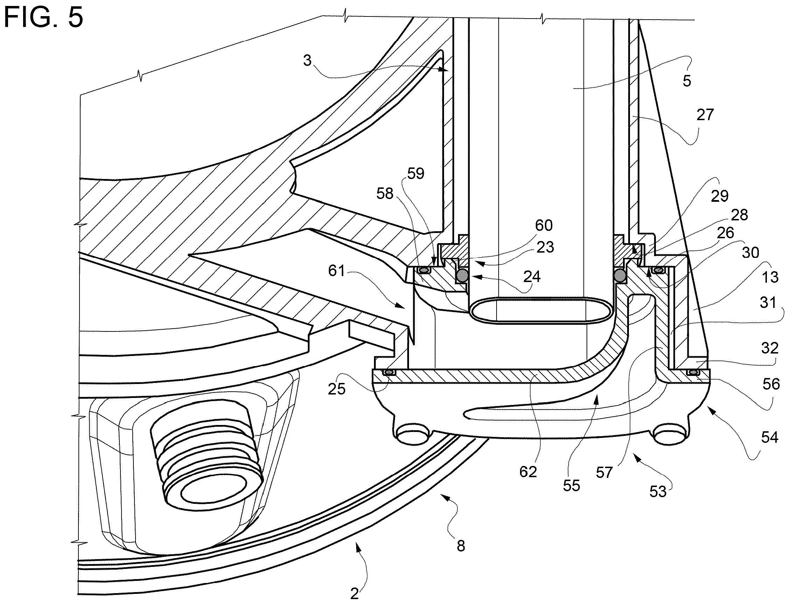

With reference to Figure 5, a hydraulic fitting 53 is shown, which fulfils the function of connecting the conduit 20 and the tubular member 3 to one another and of replacing the hydraulic fitting (Figure 3). The hydraulic fitting 53 comprises a mounting part 54 and a connecting part 55. The mounting part 54 comprises a flange 56 configured for being fixed in a releasable manner to the flange 32; a cylindrical wall 57, which, in use, is parallel to the wall 31; and an annular wall 58, along which there is obtained an abutment 59 striking against the abutment 30 and a protrusion 60 for locking the spacer 23 against the abutment 28. In this specific case, the cylindrical wall 57 has an opening 61 in the area of the inlet of the conduit 20. The connecting part 55 comprises a wall 62 fitted about the end section 5 and connected to the cylindrical wall 57 in the area of the opening 61.

This description describes three types of hydraulic fittings 15, 16 and 53, but - of course - further embodiments are possible to connect the heat exchanger 1 to conduits, not shown, having configurations that are different from the ones shown in the accompanying Figures.

Finally, it is clear that the invention described herein can be subjected to changes and variations, without for this reason going beyond the scope of protection of the appended claims. In particular, the tubular member can be made of steel or aluminium, with or without fins. When the tubular member is provided with fins, they are removed in the end sections.

## Claims

1. A heat exchanger for a domestic boiler or a water heater, the heat exchanger (1) comprising a casing (2) configured to convey combustion fumes; a tubular member (3), which is configured to convey water, is wound in a helix about a given axis (A) to form a plurality of adjacent coils (4) housed in the casing (2), and at least a straight end section (5; 6) housed in a tubular body (13; 14) of the casing (2); a hydraulic fitting (15; 16; 53), which comprises a mounting part (21; 45; 54) joined to the tubular body (13; 14) and a connecting part (22; 46; 55) for tightly and hydraulically connecting an end section (5; 6) with a conduit (17; 18; 20) of a hydraulic circuit; at least a sealing ring (24) arranged between the connecting part (22; 46; 55) and the end section (5; 6) of the tubular member (3) for ensuring liquid-tight connection between the hydraulic fitting (15; 16; 53) and the tubular member (3); a spacer (23) fitted about the end section (5; 6) and cooperating with the hydraulic fitting (15; 16; 53) and the tubular body (13 ; 14) of the casing (2) in order to keep the sealing ring (24) in a given position along the end section (5); at least a further sealing ring (25, 26) arranged between the mounting part (21; 45; 54) and the tubular body (13; 14) for ensuring a gas-tight junction between the casing (2) and the hydraulic fitting (15; 16; 53); wherein the tubular body (13; 14) comprises in sequence at least a cylindrical wall (27; 41); an abutment (28; 42) for the spacer (23); a cylindrical wall section (29; 43); and a first flange (32; 44) and the mounting part (21; 45; 54) of the hydraulic fitting (15; 16; 53) comprises a second flange (33; 47, 56;) selectively connectable to the first flange (32: 44); and the further sealing ring (25) is locked between the first flange (32; 44) and the second flange (33; 47; 56)) so that the hydraulic fitting (15; 16; 53) is joined to the tubular body (13; 14) in a releasable manner.

2. The heat exchanger as claimed in any one of the foregoing Claims, wherein the mounting part (21; 45; 54) and the connecting part (22; 46; 55) are made in a single piece, in particular by molding of a polymer material.

3. The heat exchanger as claimed in any one of the foregoing Claims, wherein the connecting part (22; 46) comprises a first pipe section (38; 48) shaped and sized to fit about the end section (5) ; a second pipe section (39; 51) shaped and sized to be connected to conduit (17; 18); and an intermediate pipe section (40; 52) for connecting the cross-section of the first pipe section (38; 48) to the cross-section of the second pipe section (39; 52).

4. The heat exchanger as claimed in Claim 3, wherein the connecting part (22) is parallel to the end section (5) and, in particular, is coaxial to the end section (5).

5. The heat exchanger as claimed in Claim 3, wherein the connecting part (46) forms a bend with respect to the end section (6) and, in particular, forms an elbow.

6. The heat exchanger as claimed in any one of the foregoing Claims, wherein said conduit (20) is made in the casing (2) and the connecting part (55) comprises a wall (62) fitted about the end section (5) and connected to the conduit (20).

7. The heat exchanger as claimed in Claim 8, wherein said conduit (20) leads to the tubular body (13).

## Patentansprüche

1. Wärmetauscher für einen Haushaltskessel oder einen Warmwasserbereiter, wobei der Wärmetauscher (1) aufweist: ein zum Fördern von Verbrennungsabgasen ausgebildetes Gehäuse (2); ein zum Fördern von Wasser ausgebildetes rohrförmiges Teil (3) ist in einer Helix um eine vorgegebene Achse (A) gewunden, um eine Mehrzahl von benachbarten Wicklungen, die von dem Gehäuse (2) aufgenommen werden, und wenigstens einen geraden Endabschnitt (5; 6) zu bilden, der von einem rohrförmigen Körper (13; 14) des Gehäuses (2) aufgenommen wird; eine Hydraulik-Kupplung (15; 16; 53), die einen mit dem rohrförmigen Körper (13; 14) verbundenen Befestigungsteil (21; 45; 54) und einen Verbindungsteil (22; 46; 55) zum festen und hydraulischen Verbinden eines Endabschnitts (5; 6) mit einem Schlauch (17; 18; 20) eines Hydraulikkreises aufweist; wenigstens einen Dichtring (24), der zwischen dem Verbindungsteil (22; 46; 55) und dem Endabschnitt (5; 6) des rohrförmigen Teils (3) angeordnet ist, um eine flüssigkeitsdichte Verbindung zwischen der Hydraulikkupplung (15; 16; 53) und dem rohrförmigen Teil (3) sicherzustellen; einen Abstandshalter (23), der um den Endabschnitt (5; 6) herum angepasst ist und mit der Hydraulikkupplung (15; 16; 53) und dem rohrförmigen Körper (13; 14) des Gehäuses (2) zusammenwirkt, um den Dichtring (24) in einer vorgegebenen Position entlang des Endabschnitts (5) zu halten; wenigsten einen weiteren Dichtring (25; 26), der zwischen dem Befestigungsteil (21; 45; 54) und dem rohrförmigen Körper (13; 14) angeordnet ist, um eine gasdichte Verbindung zwischen dem Gehäuse (2) und der Hydraulikkupplung (15; 16; 53) sicherzustellen; wobei der rohrförmige Körper (13; 14) in der Reihenfolge wenigstens eine zylindrische Wand (27; 41); ein Anschlagelement (28; 42) für den Abstandshalter (23); einen zylindrischen Wandabschnitt (29; 43); und einen ersten Flansch (32; 44) aufweist, und der Befestigungsteil (21; 45; 54) der Hydraulikkupplung (15; 16; 53) weist einen zweiten Flansch (33; 47; 56) auf, der wahlweise mit dem ersten Flansch (32; 44) verbindbar ist; und der weitere Dichtring (25) ist zwischen dem ersten Flansch (32; 44) und dem zweiten Flansch (33; 47; 56) befestigt, so dass die Hydraulikkupplung (15; 16; 53) mit dem rohrförmigen Körper (13; 14) in einer lösbaren Weise verbunden ist.

2. Wärmetauscher wie in irgendeinem der vorhergehenden Ansprüche beansprucht, wobei der Befestigungsteil (21; 45; 54) und der Verbindungsteil (22; 46; 55) aus einem Stück bestehen, insbesondere durch Formgießen eines polymeren Materials.

3. Wärmetauscher wie in irgendeinem der vorhergehenden Ansprüche beansprucht, wobei der Verbindungsteil (22; 46) einen ersten Rohrabschnitt (38; 48), der derart geformt und bemessen ist, dass dieser auf den Endabschnitt (5) passt; einen zweiten Rohrabschnitt (39; 51), der derart geformt und bemessen ist, dass dieser mit dem Schlauch (17; 18) verbunden werden kann; und einen dazwischen liegenden Rohrabschnitt (40; 52) zum Verbinden der Schnittfläche des ersten Rohrabschnitts (38; 48) mit der Schnittfläche des zweiten Rohrabschnitts (39; 52) aufweist.

4. Wärmetauscher wie im Anspruch 3 beansprucht, wobei der Verbindungsteil (22) parallel zu dem Endabschnitt (5) ist, und insbesondere koaxial zu dem Endabschnitt (5) ist.

5. Wärmetauscher wie im Anspruch 3 beansprucht, wobei der Verbindungsteil (46) einen Bogen in Bezug auf den Endabschnitt (6) ausbildet, insbesondere einen Krümmer bildet.

6. Wärmetauscher wie in irgendeinem der vorhergehenden Ansprüche beansprucht, wobei der Schlauch (20) in dem Gehäuse (2) gemacht ist und der Verbindungsteil (55) eine Wand (62) aufweist, die um den Endabschnitt (5) herum angepasst ist und mit dem Schlauch (20) verbunden ist.

7. Wärmetauscher wie im Anspruch 6 beansprucht, wobei dieser Schlauch zu dem rohrförmigen Körper (13) führt.

## Revendications

1. Echangeur de chaleur pour une chaudière domestique ou un chauffe-eau, l'échangeur de chaleur (1) comprenant un carter (2) configuré pour transporter des fumées de combustion ; un élément tubulaire (3) qui est configuré pour transporter de l'eau, est enroulé en une hélice autour d'un axe donné (A) afin de former une pluralité de spires (4) adjacentes logées dans le carter (2), et au moins une section d'extrémité droite (5 ; 6) logée dans un corps tubulaire (13 ; 14) du carter (2) ; un raccord hydraulique (15 ; 16 ; 53) qui comprend une partie de montage (21 ; 45 ; 54) assemblée au corps tubulaire (13 ; 14) et une partie de raccordement (22 ; 46 ; 55) pour raccorder de manière étanche et hydraulique une section d'extrémité (5 ; 6) avec un conduit (17 ; 18 ; 20) d'un circuit hydraulique ; au moins une bague d'étanchéité (24) agencée entre la partie de raccordement (22 ; 46 ; 55) et la section d'extrémité (5 ; 6) de l'élément tubulaire (3) pour garantir le raccordement étanche au liquide entre le raccord hydraulique (15 ; 16 ; 53) et l'élément tubulaire (3) ; un dispositif d'espacement (23) monté autour de la section d'extrémité (5 ; 6) et coopérant avec le raccord hydraulique (15 ; 16 ; 53) et le corps tubulaire (13 ; 14) du carter (2) afin de maintenir la bague d'étanchéité (24) dans une position donnée le long de la section d'extrémité (5) ; au moins une autre bague d'étanchéité (25, 26) agencée entre la partie de montage (21 ; 45 ; 54) et le corps tubulaire (13 ; 14) pour garantir une jonction étanche au gaz entre le carter (2) et le raccord hydraulique (15 ; 16 ; 53) ; dans lequel le corps tubulaire (13 ; 14) comprend, en séquence, au moins une paroi cylindrique (27 ; 41) ; une butée (28 ; 42) pour le dispositif d'espacement (23) ; une section de paroi cylindrique (29 ; 43) ; et une première bride (32 ; 44) et la partie de montage (21 ; 45 ; 54) du raccord hydraulique (15 ; 16 ; 53) comprend une seconde bride (33 ; 47, 56) pouvant être sélectivement raccordée à la première bride (32 ; 44) ; et l'autre bague d'étanchéité (25) est verrouillée entre la première bride (32 ; 44) et la seconde bride (33 ; 47 ; 56) de sorte que le raccord hydraulique (15 ; 16 ; 53) est assemblé au corps tubulaire (13 ; 14) d'une manière amovible.

2. Echangeur de chaleur selon l'une quelconque des revendications précédentes, dans lequel la partie de montage (21 ; 45 ; 54) et la partie de raccordement (22 ; 46 ; 55) sont réalisées d'un seul tenant, en particulier par moulage d'un matériau polymère.

3. Echangeur de chaleur selon l'une quelconque des revendications précédentes, dans lequel la partie de raccordement (22 ; 46) comprend une première section de tuyau (38 ; 48) formée et dimensionnée pour s'adapter autour de la section d'extrémité (5) ; une seconde section de tuyau (39 ; 51) formée et dimensionnée pour être raccordée au conduit (17 ; 18) ; et une section de tuyau intermédiaire (40 ; 52) pour raccorder la section transversale de la première section de tuyau (38 ; 48) à la section transversale de la seconde section de tuyau (39 ; 52).

4. Echangeur de chaleur selon la revendication 3, dans lequel la partie de raccordement (22) est parallèle à la section d'extrémité (5) et en particulier, est coaxiale par rapport à la section d'extrémité (5).

5. Echangeur de chaleur selon la revendication 3, dans lequel la partie de raccordement (46) forme une courbure par rapport à la section d'extrémité (6) et en particulier, forme un coude.

6. Echangeur de chaleur selon l'une quelconque des revendications précédentes, dans lequel ledit conduit (20) est réalisé dans le carter (2) et la partie de raccordement (55) comprend une paroi (62) montée autour de la section d'extrémité (5) et raccordée au conduit (20) .

7. Echangeur de chaleur selon la revendication 6, dans lequel ledit conduit (20) mène au corps tubulaire (13) .
